# EUROPÄISCHE PATENTSCHRIFT

(11) **EP 1 156 989 B1**
(45) Veröffentlichungstag und Bekanntmachung des Hinweises auf die Patenterteilung: **01.09.2004**
(21) Anmeldenummer: 00905044.4
(22) Anmeldetag: 09.02.2000
(51) Int. Cl.: C03C 3/087, C03C 3/095, C03C 13/00

(54) **HOCHZIRCONIUMOXIDHALTIGES GLAS UND SEINE VERWENDUNGEN**
GLASS WITH HIGH PROPORTION OF ZIRCONIUM-OXIDE AND ITS USES
VERRE A HAUTE TENEUR EN OXYDE DE ZIRCONIUM ET SON UTILISATION

(30) Priorität: 15.02.1999 DE 19906241; 23.09.1999 DE 19945517
(43) Veröffentlichungstag der Anmeldung: 28.11.2001
(73) Patentinhaber: Schott Glas, 55122 Mainz (DE); CARL-ZEISS-STIFTUNG trading as SCHOTT GLASWERKE, 55122 Mainz (DE)
(72) Erfinder: NAUMANN, Karin, D-55270 Ober-Olm (DE); GREULICH-HICKMANN, Norbert, D-55127 Mainz (DE); KOLBERG, Uwe, D-65252 Mainz (DE); KIEFER, Werner, D-55126 Mainz (DE); RITTER, Simone, D-55116 Mainz (DE)
(86) Internationale Anmeldenummer: PCT/EP2000/001048
(87) Internationale Veröffentlichungsnummer: WO 2000/048954

(56) Entgegenhaltungen:
- WO-A-98/40320
- FR-A- 2 376 085
- GB-A- 965 018
- GB-A- 2 220 654
- DATABASE WPI Section Ch, Week 199204 Derwent Publications Ltd., London, GB; Class L01, AN 1992-025228 XP002138233 & DD 293 105 A (AKAD WISS ANORG CHE), 22. August 1991 (1991-08-22) in der Anmeldung erwähnt
- DATABASE WPI Section Ch, Week 197902 Derwent Publications Ltd., London, GB; Class L01, AN 1979-03629B XP002138235 & SU 594 066 A (SHULTS M M), 2. Februar 1978 (1978-02-02)
- DATABASE WPI Section Ch, Week 199917 Derwent Publications Ltd., London, GB; Class L01, AN 1999-198899 XP002138234 & JP 11 043347 A (ASAHI GLASS CO LTD), 16. Februar 1999 (1999-02-16)

## Beschreibung

Die Erfindung betrifft ein hochzirconiumoxidhaltiges Glas sowie seine Verwendungen.

Hochzirconiumoxidhaltige Gläser sind vor allem im Zusammenhang mit alkaliresistenten Glasfasern zur Betonverstärkung beschrieben.
Im Vergleich zu E-Glas, einem weitgehend alkalifreien Aluminoborosilicatglas, weisen Fasern aus bekannten ZrO₂ - haltigen Gläsern zwar eine höhere Alkalibeständigkeit auf, jedoch ist insbesondere ihre Beständigkeit im Zement über lange Zeiträume hinweg noch unzureichend. Die Alkalibeständigkeit von betonverstärkenden Fasern ist von Bedeutung und steht daher bei der Glasentwicklung meist im Vordergrund, weil das Abbinden des Zementes unter stark alkalischen Bedingungen (pH-Werte bis ca. 12,5) erfolgt.
Offensichtlich ist jedoch für den Langzeiteinsatz als Verstärkungsmittel in Beton neben der Alkalibeständigkeit auch die sonstige chemische Beständigkeit, insbesondere die hydrolytische Beständigkeit, von Bedeutung, da sie die Langzeitbeständigkeit verbessert.

Gläser, die sowohl gegenüber Wasser, Säuren und Laugen eine hohe Resistenz zeigen, sind für die verschiedensten Anwendungen interessant, z B. für Pharmaverpackungen oder für Sichtkontrollfenster in Prozeßbehältem, insbesondere, wenn sie zusätzlich eine hohe Temperaturbelastbarkeit aufweisen.

Ein Merkmal für eine hohe Temperaturbelastbarkeit ist eine hohe Transformationstemperatur T_{g}. Bei Gläsern mit hohem T_{g} ist erfahrungsgemäß die sogenannte "Compaction" (Schrumpf oder "Shrinkage") gering. Es handelt sich hierbei um den Schrumpf von Glasteilen bei Temperaturbehandlungen unterhalb von T_{g}, eine Eigenschaft, die selbst nur mit großem experimentellen Aufwand hinreichend genau bestimmt werden kann und beispielsweise für Anwendungen, bei denen sehr strenge Maßstäbe an die Formtreue der Glasteile gelegt werden, von Bedeutung ist, so z. B. für Anwendungen in der Displaytechnik.

Ein hoher T_{g} und damit eine hohe Temperaturbelastbarkeit des Glases ist ebenso in der Dünnschichtphotovoltaiktechnologie, insbesondere in Solarzellen auf der Basis von Chalkopyriten wie Kupferindiumdiselenid (CIS), aber auch alternativen Verbindungshalbleitem wie CdTe von Bedeutung. In der Dünnschichtphotovoltaiktechnologie sind somit höhere Beschichtungstemperaturen möglich, die eine optimierte Aufbringung von Dünnschichten mit einer verbesserten Materialqualität gewährleisten, die sich, z. B. in einer Solarzelle, wirkungsgraderhöhend auswirkt.

Für optische Anwendungen sind zur Korrektur von Abbildungsfehlern Gläser mit hoher negativer anomaler Teildispersion im blauen Spektralbereich (Δ P_{g,F}) höchst interessant. Nachteilig an den bisher bekannten Gläsern dieser Serie ist, daß sie entweder hohe Mengen an PbO aufweisen, was aus Umweltgesichtspunkten unerwünscht ist, und/oder eine schlechte chemische Beständigkeit besitzen oder daß für bleifreie Substitutionsprodukte große Mengen der sehr teuren Rohstoffe Nb₂O₅ und insbesondere Ta₂O₅ verwendet werden müssen, was die wirtschaftliche Fertigung stark erschwert. Solche bleifreien Gläser sind aus DE-OS 27 29 706 bekannt.

In der Patentliteratur sind auch bereits die verschiedensten Schriften bekannt, die alkalibeständige Gläser mit hohen ZrO₂ -Gehalten beschreiben, welche jedoch noch Nachteile aufweisen.

DE - OS 29 27 445 beschreibt eine alkalibeständige Glasmasse, die wenigstens aus 8 Gew.-% R₂O, nämlich 8-17 Gew.-% Na₂O und 0-5 Gew.-% K₂O enthält. Auch CZ 236 744 beschreibt Glasfasern aus Minerairohstoffen, die wenigstens 8 Gew.-% Na₂O und/oder K₂O enthalten.

Die britische Patentschrift GB 1 290 528 beschreibt Glaszusammensetzungen zur Herstellung von Glasfasern, die 13 bis 23 mol-% R₂O enthalten.

Gläser mit einem so hohen Alkaligehalt, wie sie auch in der Glasfasermateriallien für Komponenten von Abgassystemen für Verbrennungsmotoren beschreibenden europäischen Patenschrift EP 0 446 064 B1 (13 -18 Gew.% Na₂O + K₂O) vorkommen und wie auch die kommerziell erhältliche Cemfil-Faser mit einer Zusammensetzung V1 (s. u.), zeigen eine schlechte hydrolytische Beständigkeit.

Dasselbe gilt für die Glasfasern gemäß DE 17 96 339 C3 auf der Grundlage eines Glases mit 11 Gew.-% Na₂O und 1 Gew.-% Li₂O sowie für die zu Fasern verarbeiteten Gläser der DE 40 32 460 A1 mit 10 - 15 Gew.-% Na₂O und 0,1 - 2 Gew.-% K₂O.

WO 98/40320 A beschreibt ein Kalk-Natron-Silicatglas für die Herstellung von Flachglasscheiben als Brandschutzgläser. Seine wesentlichen Eigenschaften sind eine Verarbeitungstemperatur V_{A} < 1200 °C und ein Koeffizient ϕ zwischen 0,50 und 0,85 N/(mm² °C). Das Glas kann neben den Komponenten SiO₂, Na₂O und CaO weitere Komponenten enthalten, darunter ZrO₂, jedoch nur bis zu 8 Gew.-%.

SU 594 066 A beschreibt Gläser, die Li₂O enthalten, und zwar zwischen 1,2 und 5 Gew.-%, und die sehr kristallisationsempfindlich sind.

Die Patentschrift DD 293 105 A5 beschreibt ein Verfahren zur Herstellung von hochalkaliresistenten Glasfasern und daraus hergestellte Produkte, wobei die zu verspinnende Glasschmelze neben SiO₂, R₂O₃, ZrO₂, RO und R₂O (K₂O, Na₂O und/oder Li₂O) auch Fluorid enthält. Auf dieses Flußmittel kann nur verzichtet werden, wenn Li₂O vorhanden ist. Auch diese Gläser sind mit 8 - 14 Gew.-% R₂O relativ hoch alkalihaltig.

Die ebenfalls hochalkalihaltigen (10 - 25 Gew.-% R₂O) Glaszusammensetzungen aus der deutschen Offenlegungsschrift DE - OS 2 406 888 enthalten bis zu 20 Gew.-% an Oxiden der Seltenen Erden, beispielsweise Ceroxid oder auch natürlich vorkommende Mischungen dieser Oxide.

Seltenerdoxide, und zwar zusammen mit TiO₂ 0,5 - 16 Gew.-%, wobei der TiO₂ - Anteil höchstens 10 Gew.-% des Glases beträgt, sind auch in den Gläsern aus der deutschen Offenlegungsschrift DE 31 07 600 A1 enthalten. Sie enthalten weiterhin 0,1 - 1 Gew.-% Cr₂O₃. Wesentlich ist hierbei, daß das Chrom vorwiegend im dreiwertigem Zustand vorliegt.

Die deutsche Offenlegungsschrift DE - OS 26 14 395 beschreibt Al₂O₃-freie Gläser, die für ihre Alkalibeständigkeit 0,5 - 10 Gew.-% Cr₂O₃ + SnO₂ enthalten müssen, Komponenten, die folgende Nachteile aufweisen: Cr₂O₃ löst sich nur schwer im Glasfluß auf, und auch bei Verwendung von Chromsalzen können Schwierigkeiten durch "Chromknoten" auftreten. SnO₂ ist ein guter Keimbildner und fördert daher die Kristallisation. Weiter benötigen die Gläser als Schmelzhilfsmittel 0,05 - 1 Gew.-% SO₃, was zu störender Schaum- und Gallebildung führen kann.

DE - OS 30 09 953 beschreibt Glasfasern, die neben ZrO₂ ThO₂ enthalten müssen. Diese Komponente ist zur Erzielung der Alkalibeständigkeit erforderlich. Aufgrund ihrer Radioaktivität ist es jedoch erstrebenswert, auf diese Komponente verzichten zu können.

Aus EP 0 500 325 A1 sind Glasfasern mit 5 - 18 mol-% TiO₂ bekannt. Ihre resulderende chemische Beständigkeit wird erkauft mit einer sehr hohen Kristallisationsanfälligkeit, was insbesondere hinsichtlich der Spinnbarkeit von Nachteil ist.

JP 62-13293 B2 beschreibt Glaszusammensetzungen für Kernglas und Überzug von Glasfasern, die wenigstens 5 Gew.-% B₂O₃ enthalten. ZrO₂ ist lediglich fakultative Komponente. Diese Gläser sollen zwar eine hohe Wasserbeständigkeit haben, was jedoch aufgrund der hohen B₂O₃ -Gehalte bei relativ hohen Alkaligehalten nicht über den gesamten Zusammensetzungsbereich gewahrt sein wird, da sich leicht wasserlösliche Alkaliboratphasen bilden können.

DE -OS 2 323 932 beschreibt Glasfasern, die sowohl P₂O₅ als auch B₂O₃ neben sehr hohen Gehalten an ZrO₂ (8 - 16 mol-%) enthalten. Der Alkaligehalt kann innerhalb eines weiten Bereiches variieren (1,5 - 25 mol-%). Ein solch hoher ZrO₂-Gehalt hebt zwar die Alkaliresistenz stark an, P₂O₅ verringert sie jedoch wieder. Außerdem kann die hydrolytische Beständigkeit nicht über den gesamten Zusammensetzungsbereich hinweg ausreichend sein.

GB 2 232 988 A beschreibt ZrO₂ -haltige Glasfasern, die zur Verbesserung ihrer Alkalibeständigkeit mit einem thermoplastischen Harz überzogen sind. Aufgrund dieses zusätzlichen Verfahrensschrittes sind solche Fasern nur teuer und aufwendig herstellbar. Als Fasermaterial können Gläser aus dem System SiO₂ - ZrO₂ - R₂O mit recht großer Variationsbreite der Komponenten und mit weiteren lediglich fakultativen Komponenten verwendet werden, da aufgrund des Überzugs die entsprechenden Eigenschaften des Glases an Bedeutung verlieren.

Es ist nun Aufgabe der Erfindung, ein Glas bereitzustellen, das nicht nur eine hohe Laugenbeständigkeit, sondern auch eine hohe hydrolytische Beständigkeit und eine relativ gute Säurebeständigkeit aufweist, das thermisch belastbar und noch gut verarbeitbar ist.

Diese Aufgabe wird durch das im Hauptanspruch beschriebene hochzirconiumoxidhaltige Glas gelöst.

Das erfindungsgemäße Glas enthält 54 bis 72 Gew.-% SiO₂. Bei höheren Gehalten würde die Schmelzbarkeit verschlechtert, bei niedrigeren Gehalten würde die Glasbildung erschwert. Wenigstens 55 Gew.-% sind besonders bevorzugt, wenigstens 59 Gew.-% sind ganz besonders bevorzugt.

Al₂O₃, in Anteilen von 0,5 bis 7 Gew.-%, bevorzugt bis 6 Gew.-%, vorhanden, dient ähnlich wie SiO₂ als Glasbildner und verbessert damit die Glasbildung und trägt wesentlich zur Verbesserung der chemischen Beständigkeit bei. Zu hohe Gehalte würden jedoch, insbesondere bei ZrO₂ -reichen und R₂O -armen Zusammensetzungen, zu einer erhöhten Kristallisationsneigung führen.

Wesentlich für die hohe Alkalibeständigkeit ist der ZrO₂ -Gehalt des Glases. Er beträgt daher wenigstens 10 Gew.-%. Der maximale Gehalt beträgt 20 Gew.-%, da ansonsten die Entglasungstendenz zu sehr ansteigt. Auftretende Kristalle würden zu Glasfehlern führen. Bevorzugt ist ein Gehalt zwischen 10 und 18 Gew.-%. Besonders bevorzugt ist ein Gehalt von höchstens 15 Gew.-%.

Es ist bevorzugt, daß das Gewichtsverhältnis ZrO₂ / Al₂O₃ größer als 2 ist.

Das oder die Alkalioxide, vor allem Na₂O, (2 - < 8 Gew.-% Na₂O, bevorzugt 3 - < 8 Gew.-%, besonders bevorzugt bis 4 Gew.-%, und 0 - 5 Gew.-% K₂O, bevorzugt 1 - 2 Gew.-%, mit 2 - < 8 Gew.-% Na₂O + K₂O , bevorzugt 3 - < 8 Gew.-%, besonders bevorzugt 3 - < 6 Gew.-%) dienen der Verbesserung der Schmelzbarkeit, d. h. der Erniedrigung der Viskosität, und ermöglichen die hohen ZrO₂ -Gehalte, da sie die Löslichkeit des ZrO₂ im Glas erhöhen. Bei zu hohen Alkaligehalten würde jedoch vor allem die hydrolytische Beständigkeit, aber auch, wenn auch in geringerem Maße die Laugenbeständigkeit verschlechtert. Es ist bevorzugt, daß sowohl Na₂O als auch K₂O vorhanden sind.

Mit steigendem Anteil an Al₂O₃ sinkt indirekt die ZrO₂ -Löslichkeit; dem kann im durch die genannten Grenzen gegebenen Rahmen durch das Vorhandensein der Alkalioxide begegnet werden kann. Daher ist es bevorzugt, daß das Gewichtsverhältnis Al₂O₃ / Na₂O < 1,64 beträgt, was einem molaren Verhältnis Al₂O₃ / Na₂O < 1 entspricht. Es ist besonders bevorzugt, daß nicht nur das Verhältnis Al₂O₃ / Na₂O, sondern auch das molare Verhältnis Al₂O₃ /R₂O < 1 beträgt.

B₂O₃ ist fakultative Komponente und verbessert durch Verringerung der Viskosität die Schmelzbarkeit. Ihr Gehalt soll jedoch auf weniger als 5 Gew.-%, bevorzugt auf 4 Gew.-%, beschränkt bleiben, da B₂O₃ die Alkalibeständigkeit und insbesondere die Säurebeständigkeit verschlechtert.

Von den Erdalkalioxiden, die mit mehr als 5 Gew.-% und höchstens 24 Gew.-% im Glas vorhanden sind, liegt CaO mit 3 - 11 Gew.-%, bevorzugt 3 - 10 Gew.-% und BaO mit 0,3 - 10 Gew.-% vor, während MgO mit 0 - 10 Gew.-% undSrO mit 0 - 8 Gew.-% fakultative Komponenten sind.

Die Erdalkalioxide verringern die Schmelzviskosität, drängen die Kristallisation zurück und tragen auch zur Verbesserung der Alkaliresistenz bei. Insbesondere BaO verringert die Kristallisationsneigung. Bei zu geringem Erdalkalioxidgehalt würde sich in diesen alkaliarmen Gläsern die Schmelz- und Verarbeitbarkeit zu sehr verschlechtern, sie wären nicht mehr zu Fasern verarbeitbar, und die ZrO₂ - Löslichkeit wäre zu gering. Bei einem höheren als dem genannten Maximalgehalt würden die Gläser entmischen und es käme ebenfalls zur Kristallisation. Bevorzugt ist ein Gesamtgehalt an Erdalkalioxiden von weniger als 23 Gew.-%.

Das Glas kann weiter 0 - 5 Gew.-% La₂O₃, besonders bevorzugt 0 - 4 Gew.-%, sowie 0 - 4 Gew.-% TiO₂ enthalten. Ein Zusatz von La₂O₃ verbessert die Schmelzbarkeit des Glases, es erweitert den Glasbildungsbereich und erhöht den Brechwert. La₂O₃ und TiO₂ betragen hauptsächlich zur Verbesserung der hydrolytischen und der Laugenbeständigkeit bei, wobei La₂O₃ effektiver ist als TiO₂. Zu hohe Gehalte von La₂O₃ und TiO₂ verringern die Säurebeständigkeit und führen zu Kristallisation.

Daher ist es bevorzugt, daß die Summe aus La₂O₃, TiO₂ und ZrO₂ > 8,4 ist. Besonders bevorzugt ist, daß die genannte Summe > 10 ist.

Das Glas kann weiter jeweils bis zu 2 Gew.-%, vorzugsweise bis zu 1 Gew.-%, Fe₂O₃, MnO₂, CeO₂ enthalten, wobei auch die Summe dieser drei Komponenten nicht mehr als 2 Gew.-%, vorzugsweise nicht mehr als 1 Gew.-%, betragen soll. Bei diesen Verbindungen handelt es sich um übliche Verunreinigungen in natürlich vorkommenden Rohstoffen der Glasbestandteile. Insbesondere bei der Verwendung der erfindungsgemäßen Gläser zur Herstellung von Fasern für die Betonverstärkung und als Substrat in der Photovoltaiktechnik sind preisgünstige Rohstoffe von Bedeutung. Bei der Verwendung der Gläser für optische Zwecke sind die Anforderungen an die Reinheit der Gläser und damit auch an die Reinheit der Rohstoffe i.a. deutlich höher. Hier liegt die genannte Summe und insbesondere der Fe₂O₃-Gehalt bevorzugt jeweils unter 0,005 Gew.-%.

Das Glas kann zur Läuterung übliche Läuterungsmittel in üblichen Mengen, also beispielsweise Arsenoxid, Antimonoxid, Chloride oder auch Fluoride, z. B. jew. als Ca- oder Ba- Halogenid, oder, wie bevorzugt, SnO₂ enthalten.

Innerhalb des Zusammensetzungsbereiches des Hauptanspruchs gibt es zwei bevorzugte Zusammensetzungsbereiche (in Gew.-% auf Oxidbasis).

Dies ist zum einen:
SiO₂ 54 - 72, Al₂O₃ 0,5 - 6, ZrO₂ 10 - 18, B₂O₃ 0 - 4, Na₂O 3 - < 8, K₂O 0 - 5, mit Na₂O + K₂O 3 - < 8, CaO 3 - 10, MgO 0 - 10, SrO 0 - 8, BaO 0,3 - 10, mit CaO + MgO + SrO + BaO > 5 - < 23, La₂O₃ 0 - 5, TiO₂ 0 - 4.

Die Gläser dieses Zusammensetzungsbereiches sind hoch temperaturbeständig. Sie weisen Transformationstemperaturen von wenigstens 670 °C auf.

Ein weiterer bevorzugter Zusammensetzungsbereich ist folgender:
SiO₂ 59 - 72, Al₂O₃ 0,5 - 6, ZrO₂ 10 - 15, B₂O₃ 0 - 4, Na₂O 2 - 4, K₂O 1 - 2, mit Na₂O + K₂O 3 - < 6, CaO 3 -10, MgO 0 -10, SrO 0 - 8, BaO 0,3 - 10, mit CaO + MgO + SrO + BaO > 5 - < 23, La₂O₃ 0 - 5, TiO₂ 0 - 4.

In diesem Zusammensetzungsbereich finden sich Gläser mit thermischen Ausdehnungskoeffizienten α_{20/300} zwischen 4,5 ^{.}10⁻⁶/K und 6,0 * 10⁻⁶/K.

### Beispiele:

Aus üblichen Rohstoffen wurden zehn Beispiele erfindungsgemäßer Gläser in Pt/Rh-Tiegeln geschmolzen und zu Blöcken gegossen. Außerdem wurden Fasem im Wiederziehverfahren gezogen.
In Tabelle 1 sind die Zusammensetzung (in Gew.-% auf Oxidbasis) der Ausführungsbeispiele (A1 - A10) und eines alkalireichen Vergleichsbeispiels V1 angegeben. Der bei A1 - A10 zum jeweiligen Gesamtgehalt von 100,0 % noch fehlende Anteil ist das in der Tabelle 1 nicht angegebene Läutermittel SnO₂. In Tabelle 2 sind die wesentlichen Eigenschaften der Gläser angegeben. Dies sind der thermische Ausdehnungskoeffizient α_{20/300} [10⁻⁶/K], die Transformationstemperatur T_{g} [ °C], die Verarbeitungstemperatur V_{A} [°C], die Dichte ρ [g/cm³] der Elastizitätsmodul E [GPa], die Temperatur, bei der das Glas einen spezifischen elektrischen Volumenwiderstand von 10⁸ Ω cm hat, T_{K100} [°C],.sowie die hydrolytische Beständigkeit H nach DIN/ISO 719 [µg Na₂O/g], die Säurebeständigkeit S nach DIN 12116 [mg/dm²] und die Laugenbeständigkeit L nach ISO 675 (= DIN 52322) [mg/dm²]. Für einige Beispiele sind außerdem die optischen Daten Brechwert n_{d}, Abbezahl ν_{d} und die Anomalie der Teildispersion im blauen Bereich des Spektrums Δ P_{g, F} angegeben.

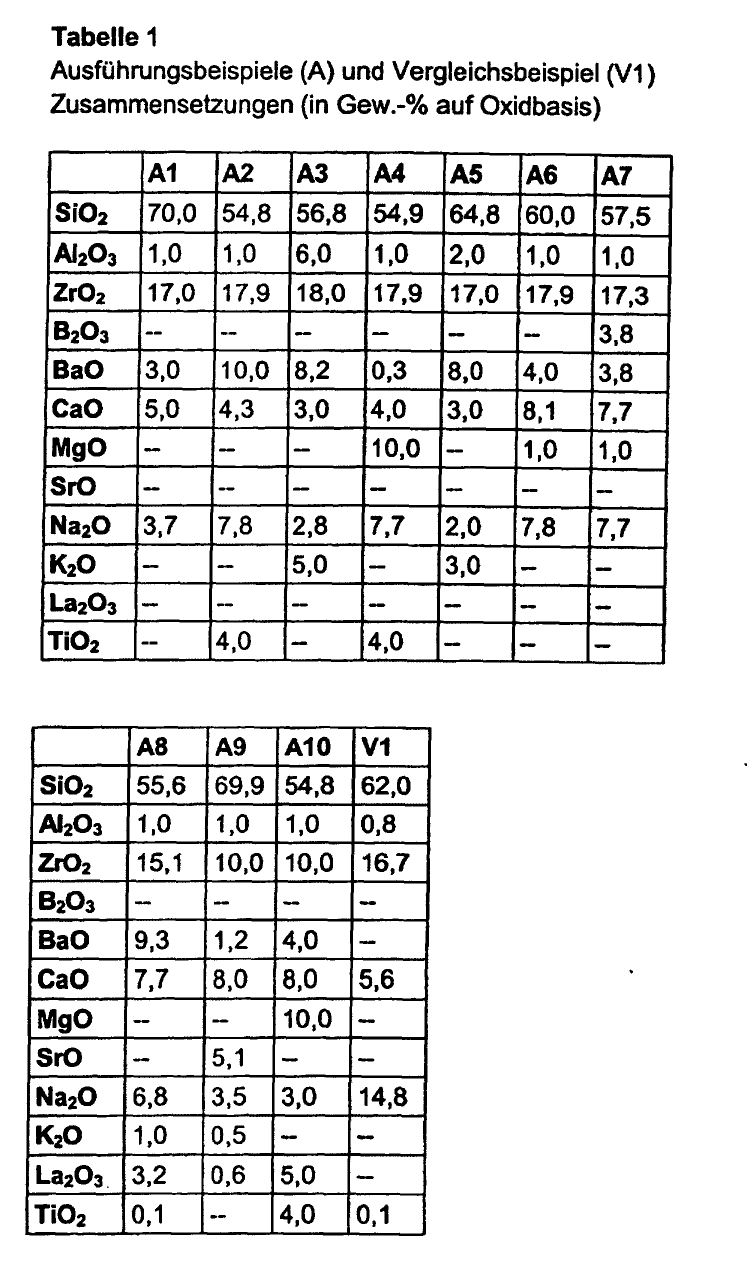

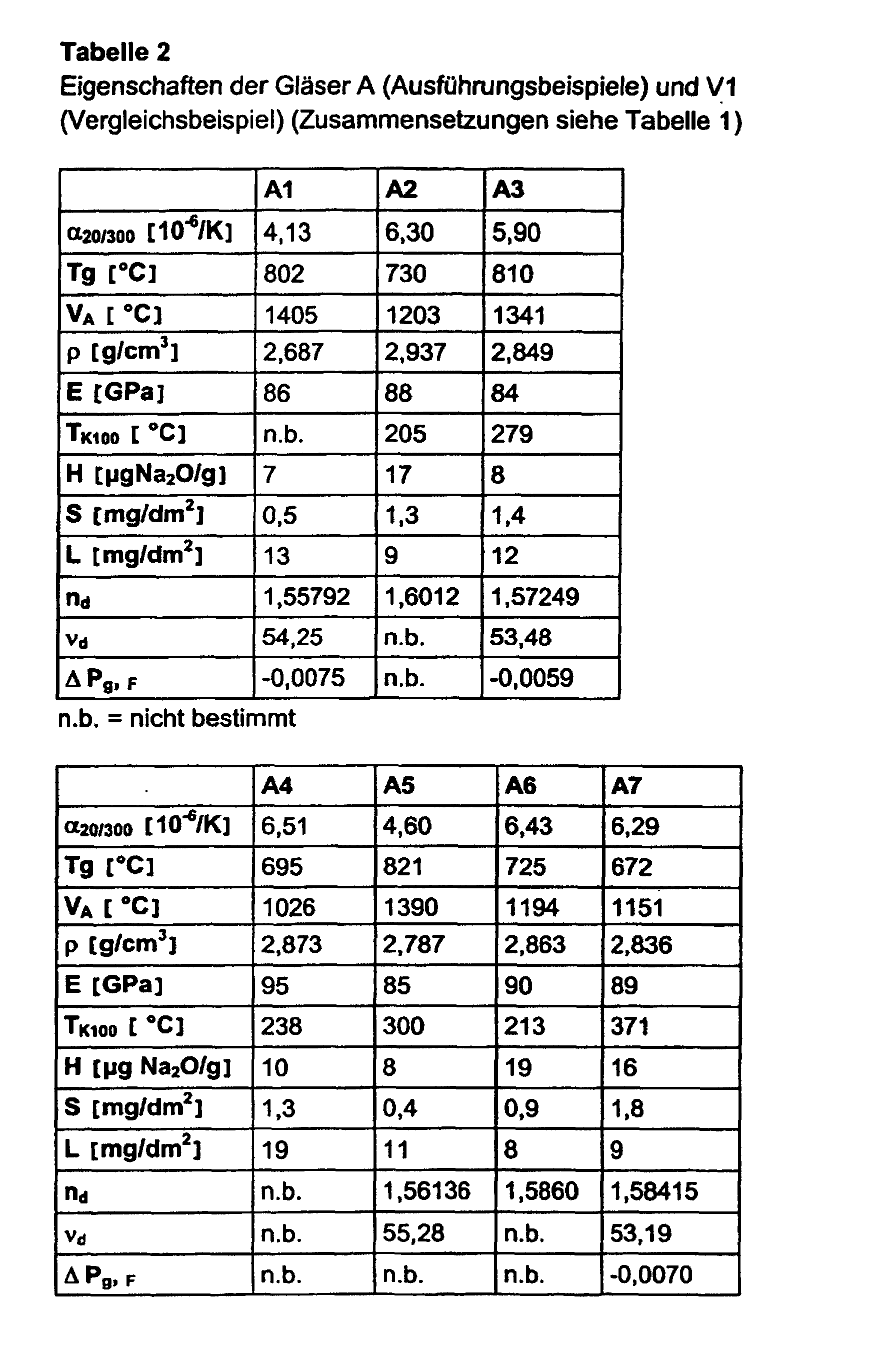

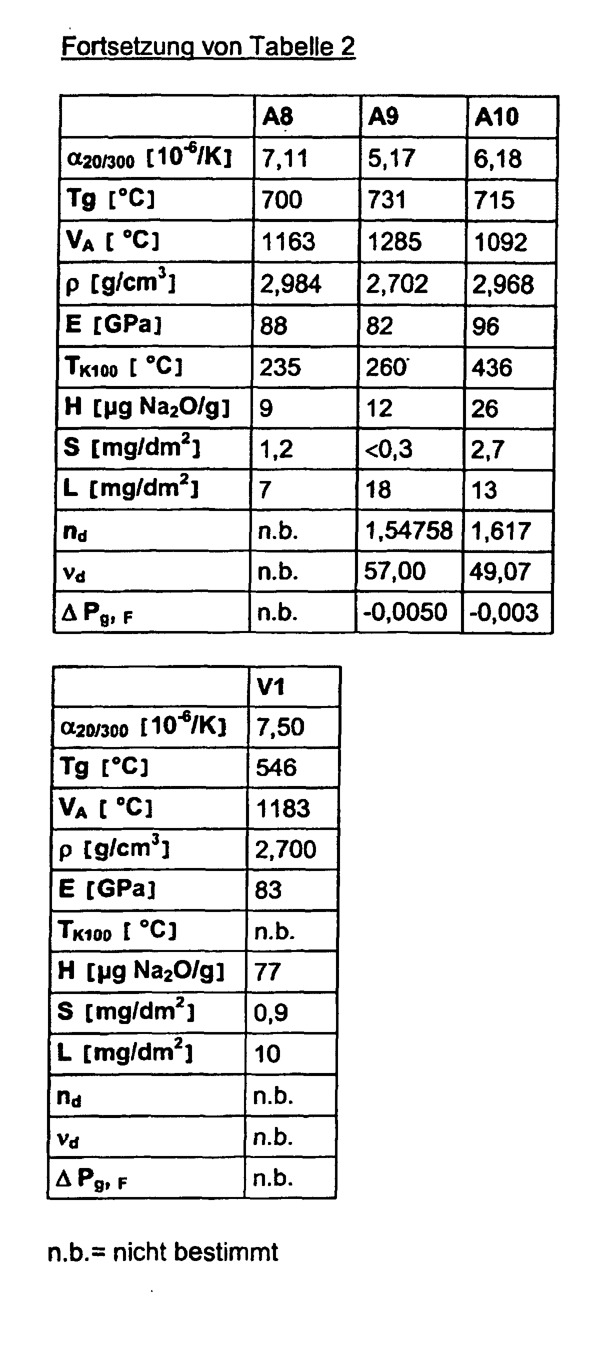

Für das Glas A1 wurde außerdem die Knoop-Härte nach DIN 52333 bestimmt. Sie beträgt 630 HK.

Die erfindungsgemäßen Gläser weisen sehr gute chemische Beständigkeiten auf:

Bei der Bestimmung der hydrolytischen Beständigkeit H nach DIN/ISO 719, bei der das Basenäquivalent des Säureverbrauchs als µg Na₂O /g Gtasgrieß angegeben ist, bedeutet ein Wert ≤ 31 die Zugehörigkeit eines Glases zur Hydrolytischen Klasse 1 ("chemisch hochresistentes Glas"). Dies ist für die erfindungsgemäßen Gläser erfüllt.

Bei der Bestimmung der Säurebeständigkeit S nach DIN 12116 bedeutet ein Gewichtsverlust bis 0,7 mg/dm² die Zugehörigkeit zur Säureklasse 1 ("säurebeständig"), über 0,7 bis 1.5 mg/dm² zur Säureklasse 2 ("schwach säurelöslich") und über 1,5 bis 15 mg/dm² zur Säureklasse 3 ("mäßig säurelöslich). Die erfindungsgemäßen Gläser gehören der Säureklasse 3 und besser an.

Bei der Bestimmung der Laugenbeständigkeit nach ISO 675 (=DIN 52322) bedeutet ein Gewichtsverlust bis 75 mg/dm² die Zugehörigkeit zur Laugenklasse 1 ("schwach laugenlöslich"), was für die erfindungsgemäßen Gläser erfüllt ist.

Die Gläser sind sehr gut geeignet als Behälterglas, speziell für chemisch aggressive Substanzen, insbesondere Flüssigkeiten.

Das Vergleichsbeispiel V1 erfüllt weder die Anforderungen an eine hohe hydrolytische Beständigkeit noch an eine hohe Transformationstemperatur. Dagegen besitzen die erfindungsgemäßen Gläser hohe Transformationstemperaturen T_{g} von wenigstens 650 °C, meist sogar wenigstens 670 °C. Damit sind sie für Verwendungen geeignet, bei denen thermisch hoch belastbare Gläser benötigt werden, beispielsweise auch als Komponenten für hochtemperaturbelastete Teile in Abgassystemen mit Katalysatoren. Aufgrund ihrer mit einer hohen Transformationstemperatur einhergehenden geringen Compaction sind die Gläser auch gut für die Verwendung als Substratgläser in der Displaytechnik geeignet.

Die erfindungsgemäßen Gläser besitzen thermische Ausdehnungskoeffizienten α_{20/300} zwischen 4,1 x 10⁻⁶/K und 7,4 x 10⁻⁶/K und sind damit mit Wolfram und Molybdän verschmelzbar und gut als Einschmelzglas für diese Metalle bzw. Legierungen geeignet.

Gläser mit thermischen Ausdehnungskoeffizienten α_{20/300} zwischen 4,5 * 10⁻ ⁶/K und 5,2 * 10⁻⁶/K sind angepaßt an das Ausdehnungsverhalten der in der CIS-Technologie als Elektrode aufgebrachten Mo-Schicht, während Gläser mit thermischen Ausdehnungskoeffizienten α_{20/300} zwischen 5,0 ^{·} 10⁻⁶/K und 6,0 * 10⁻⁶/K an das Ausdehnungsverhalten von CdTe angepaßt sind. Damit sind diese thermisch hoch belastbaren Gläser hervorragend geeignet als Substrate in der Photovoltaik, speziell in diesen Dünnschichttechnologien.

Die erfindungsgemäßen Gläser sind durch Ionenaustausch chemisch vorspannbar, wodurch sie auch für Anwendungen, bei denen eine erhöhte Bruchfestigkeit wichtig ist, z. B. als Substrate für EDV-Speichermedien, gut geeignet sind.

Die erfindungsgemäßen Gläser lassen sich gut zu Glasfasern verarbeiten. Aufgrund der sehr guten chemischen Beständigkeit der Gläser, die eine erhöhte Langzeitbeständigkeit bewirkt, sind diese Glasfasern hervorragend geeignet zur Verstärkung von Betonbauteilen. Sowohl der Einsatz als Kurzfaser wie auch als Endlosfaser (Herstellung von Beton-Glasfaser-Kompositen) ist möglich.

Die Gläser weisen Verarbeitungseigenschaften auf, um z.B. Blöcke, Platten, Stangen, Röhren und Fasern herzustellen; und sie sind je nach Verwendungszweck auch in diesen Formen einsetzbar.

Die optischen Daten der Gläser, nämlich ein Brechwert n_{d} zwischen 1,53 und 1,63, eine Abbezahl ν_{d} zwischen 47 und 66 und insbesondere eine negative Abweichung der Teildispersion von der Normalgeraden (= negative anomale Teildispersion) im blauen Spektralbereich Δ P_{g,F} bis - 0,0130, machen sie auch für optische Anwendungen, z. B. für Gläser zur Korrektur chromatischer Ausbildungsfehler, interessant.

Die Gläser stellen sogenannte Kurzflintsondergläser dar. Es ist überraschend, daß die Gläser neben den beschriebenen guten Eigenschaften hinsichtlich thermischer, mechanischer und chemischer Kenngrößen auch sehr interessante optische Eigenschaften, insbesondere eine negative anomale Teildispersion in blauen Spektralbereich (Δ P_{g,F}) aufweisen. Hier ist bisher nur bekannt gewesen, daß diese Eigenschaft in Kombination mit relativ niedrigen Abbezahlen (Gläser von Flinttyp ν_{d} < ca. 55) durch PbO, Nb₂O₅ und Ta₂O₅ verursacht wird. Bei Gläsern mit hoher Abbezahl (Krontyp ν_{d} > ca. 55) kann diese Eigenschaft auch durch die Erdalkalioxide MgO - BaO und Seltenerdelemente La₂O₃, Gd₂O₃, Yb₂O₃, Lu₂O₃ usw. verursacht werden, oft in Kombination mit dem Glasbildner B₂O₃.

Hier liegen nun erstmalig Gläser mit negativem Δ P_{g,F} mit niedrigen bis mittleren Abbezahlen vor, die relativ niedrige Konzentrationen an Erdalkalioxiden, B₂O₃ und ggf. La₂O₃ als Seltenerdoxid aufweisen und frei von den teuren Komponenten Nb₂O₅ und Ta₂O₅ sind.

## Patentansprüche

1. Hochzirconiumoxidhaltiges Glas,
**gekennzeichnet durch**
eine Zusammensetzung (in Gew.-% auf Oxidbasis) von
| | |
|---|---|
| SiO₂ | 54 - 72 |
| Al₂O₃ | 0,5 - 7 |
| ZrO₂ | 10 - 20 |
| B₂O₃ | 0 - <5 |
| Na₂O | 2 - <8 |
| K₂O | 0 - 5 |
| mit Na₂O + K₂O | 2 - <8 |
| CaO | 3 - 11 |
| MgO | 0 - 10 |
| SrO | 0 - 8 |
| BaO | 0,3 - 10 |
| mit CaO + MgO + SrO + BaO | >5 - 24 |
| La₂O₃ | 0 - 5 |
| TiO₂ | 0 - 4 |
| + ggf. übliche Läutermittel in üblichen Mengen | |

2. Glas nach Anspruch 1,
**gekennzeichnet durch**
eine Zusammensetzung (in Gew.-% auf Oxidbasis) von
| | |
|---|---|
| SiO₂ | 54 - 72 |
| Al₂O₃ | 0,5 - 6 |
| ZrO₂ | 10 - 18 |
| B₂O₃ | 0 - 4 |
| Na₂O | 3 - <8 |
| K₂O | 0 - 5 |
| mit Na₂O + K₂O | 3 - <8 |
| CaO | 3 - 10 |
| MgO | 0 - 10 |
| SrO | 0 - 8 |
| BaO | 0,3 - 10 |
| mit CaO + MgO + SrO + BaO | >5 - <23 |
| La₂O₃ | 0 - 5 |
| TiO₂ | 0 - 4 |
| + ggf. übliche Läutermittel in üblichen Mengen | |

3. Glas nach Anspruch 1,
**gekennzeichnet durch**
eine Zusammensetzung (in Gew.-% auf Oxidbasis) von
| | |
|---|---|
| SiO₂ | 59 - 72 |
| Al₂O₃ | 0,5 - 6 |
| ZrO₂ | 10 - 15 |
| B₂O₃ | 0 - 4 |
| Na₂O | 2 - 4 |
| K₂O | 1 - 2 |
| mit Na₂O + K₂O | 3 - < 6 |
| CaO | 3 - 10 |
| MgO | 0 - 10 |
| SrO | 0 - 8 |
| BaO | 0,3 - 10 |
| mit CaO + MgO + SrO + BaO | >5 - < 23 |
| La₂O₃ | 0 - 5 |
| TiO₂ | 0 - 4 |
| + ggf. übliche Läutermittel in üblichen Mengen | |

4. Glas nach wenigstens einem der Ansprüche 1 bis 3
**dadurch gekennzeichnet,**
**daß** das Gewichtsverhältnis ZrO₂ / Al₂O₃ > 2 ist.

5. Glas nach wenigstens einem der Ansprüche 1 bis 4,
**dadurch gekennzeichnet,**
**daß** die Summe aus ZrO₂ , La₂O₃ und TiO₂ > 10 ist.

6. Glas nach wenigstens einem der Ansprüche 1 bis 5,
mit einer hydrolytischen Beständigkeit H der hydrolytischen Klasse 1, einer Säurebeständigkeit S der Säureklasse 3 oder besser, einer Laugenbeständigkeit L der Laugenklasse 1, einer Transformationstemperatur T_{g} von wenigstens 650 °C, einem thermischen Ausdehnungskoeffizienten α_{20/300} zwischen 4,1 x10⁻⁶/K und 7,4 x10⁻⁶/K, einem Brechwert n_{d} zwischen 1,53 und 1,63, einer Abbezahl ν_{d} zwischen 48 und 58 und einer negativen Abweichung der Teildispersion von der Normalgeraden im blauen Spektralbereich Δ P_{g,F} bis
-0,0130.

7. Glasfaser bestehend aus einem Glas nach wenigstens einem der Ansprüche 1 bis 6.

8. Verwendung einer Glasfaser nach Anspruch 7 zur Betonverstärkung.

9. Verwendung eines Glases nach wenigstens einem der Ansprüche 1 bis 6 als Substratglas in der Displaytechnik.

10. Verwendung eines Glases nach wenigstens einem der Ansprüche 1 bis 6 für Wolfram- oder Molybdän-Einschmelzungen.

11. Verwendung eines Glases nach wenigstens einem der Ansprüche 1 bis 6 als Glas für optische Anwendungen.

12. Verwendung eines Glasesnach wenigstens einem der Anrpüche 1 bis 6 als Behälterglas für chemisch aggressive Flüssigkeiten.

13. Verwendung eines Glases nach wenigstens einem der Ansprüche 1 bis 6 mit einem thermischen Ausdehnungskoeffizienten α_{20/300} zwischen 4,5 und 6,0 * 10⁻⁶/K als Substratglas in der Photovoltaik.

## Claims

1. Glass having a high zirconium oxide content, **characterized by** a composition (in % by weight,
based on oxide) of
| | |
|---|---|
| SiO₂ | 54 - 72 |
| Al₂O₃ | 0,5 - 7 |
| ZrO₂ | 10 - 20 |
| B₂O₃ | 0 - <5 |
| Na₂O | 2 - <8 |
| K₂O | 0 - 5 |
| with Na₂O + K₂O | 2 - <8 |
| CaO | 3 - 11 |
| MgO | 0 - 10 |
| SrO | 0 - 8 |
| BaO | 0,3 - 10 |
| with CaO + MgO + SrO + BaO | >5 - 24 |
| La₂O₃ | 0 - 5 |
| TiO₂ | 0 - 4 |
| + optionally conventional fining agents in conventional amounts. | |

2. Glass according to Claim 1, **characterized by** a composition (in % by weight, based on oxide) of
| | |
|---|---|
| SiO₂ | 54 - 72 |
| Al₂O₃ | 0,5 - 6 |
| ZrO₂ | 10 - 18 |
| B₂O₃ | 0 - 4 |
| Na₂O | 3 - <8 |
| K₂O | 0 - 5 |
| with Na₂O + K₂O | 3 - <8 |
| CaO | 3 - 10 |
| MgO | 0 - 10 |
| SrO | 0 - 8 |
| BaO | 0,3 - 10 |
| with CaO + MgO + SrO + BaO | >5 - 23 |
| La₂O₃ | 0 - 5 |
| TiO₂ | 0 - 4 |
| + optionally conventional fining agents in conventional amounts. | |

3. Glass according to Claim 1, **characterized by** a composition (in % by weight, based on oxide) of
| | |
|---|---|
| SiO₂ | 59 - 72 |
| Al₂O₃ | 0,5 - 6 |
| ZrO₂ | 10 - 15 |
| B₂O₃ | 0 - 4 |
| Na₂O | 2 - 4 |
| K₂O | 1 - 2 |
| with Na₂O + K₂O | 3 - < 6 |
| CaO | 3 - 10 |
| MgO | 0 - 10 |
| SrO | 0 - 8 |
| BaO | 0,3 - 10 |
| with CaO + MgO + SrO + BaO | >5 - < 23 |
| La₂O₃ | 0 - 5 |
| TiO₂ | 0 - 4 |
| + optionally conventional fining agents in conventional amounts. | |

4. Glass according to at least one of Claims 1 to 3, **characterized in that** the ZrO₂/Al₂O₃ weight ratio is > 2.

5. Glass according to at least one of Claims 1 to 4, **characterized in that** the sum of ZrO₂, La₂O₃ and TiO₂ is > 10.

6. Glass according to at least one of Claims 1 to 5, having a hydrolytic resistance H in hydrolytic class 1, an acid resistance S in acid class 3 or better, a caustic lye resistance L in lye class 1, a glass transition temperature T_{g} of at least 650°C and a coefficient of thermal expansion α_{20/300} of from 4.1 × 10⁻⁶/K to 7.4 × 10⁻⁶/K, a refractive index n_{d} of from 1.53 to 1.63, an Abbe number ν_{d} of from 48 to 58 and a negative anomalous partial dispersion in the blue spectral region Δ P_{g,F} of up to -0.0130.

7. Glass fibre consisting of a glass according to at least one of Claims 1 to 6.

8. Use of a glass fibre according to Claim 7 for the reinforcement of concrete.

9. Use of a glass according to at least one of Claims 1 to 6 as substrate glass in display technology.

10. Use of a glass according to at least one of Claims 1 to 6 for fusing to tungsten or molybdenum.

11. Use of a glass according to at least one of Claims 1 to 6 as glass for optical applications.

12. Use of a glass according to at least one of Claims 1 to 6 as container glass for chemically aggressive liquids.

13. Use of a glass according to at least one of Claims 1 to 6 having a coefficient of thermal expansion α_{20/300} of from 4.5 to 6.0 * 10⁻⁶/K as substrate glass in photovoltaics.

## Revendications

1. Verre contenant une forte teneur en oxyde de zirconium, **caractérisé par** une composition (en % en poids sur la base de l'oxyde) de
| | |
|---|---|
| SiO₂ | 54 - 72 |
| Al₂O₃ | 0,5 - 7 |
| ZrO₂ | 10 - 20 |
| B₂O₃ | 0 - <5 |
| Na₂O | 2 - <8 |
| K₂O | 0 - 5 |
| avec Na₂O + K₂O | 2 - <8 |
| CaO | 3 - 11 |
| MgO | 0 - 10 |
| SrO | 0 - 8 |
| BaO | 0,3 - 10 |
| avec CaO + MgO + SrO + BaO | >5 - 24 |
| La₂O₃ | 0 - 5 |
| TiO₂ | 0 - 4 |
| + ,le cas échéant, les agents d'affinage habituels dans les quantités habituelles. | |

2. Verre selon la revendication 1, **caractérisé par** une composition (en % en poids sur la base de l'oxyde) de
| | |
|---|---|
| SiO₂ | 54 - 72 |
| Al₂O₃ | 0,5 - 6 |
| ZrO₂ | 10 - 18 |
| B₂O₃ | 0 - 4 |
| Na₂O | 3 - <8 |
| K₂O | 0 - 5 |
| avec Na₂O + K₂O | 3 - <8 |
| CaO | 3 - 10 |
| MgO | 0 - 10 |
| SrO | 0 - 8 |
| BaO | 0,3 - 10 |
| avec CaO + MgO + SrO + BaO | >5 - <23 |
| La₂O₃ | 0 - 5 |
| TiO₂ | 0 - 4 |
| + ,le cas échéant, les agents d'affinage habituels dans les quantités habituelles. | |

3. Verre selon la revendication 1, **caractérisé par** une composition (en % en poids sur la base de l'oxyde) de
| | |
|---|---|
| SiO₂ | 59 - 72 |
| Al₂O₃ | 0,5 - 6 |
| ZrO₂ | 10 - 15 |
| B₂O₃ | 0 - 4 |
| Na₂O | 2 - 4 |
| K₂O | 1 - 2 |
| avec Na₂O + K₂O | 3 - < 6 |
| CaO | 3 - 10 |
| MgO | 0 - 10 |
| SrO | 0 - 8 |
| BaO | 0,3 - 10 |
| avec CaO + MgO + SrO + BaO | >5 - < 23 |
| La₂O₃ | 0 - 5 |
| TiO₂ | 0 - 4 |
| + ,le cas échéant, les agents d'affinage habituels dans les quantités habituelles. | |

4. Verre selon l'une quelconque des revendications 1 à 3, **caractérisé en ce que** le rapport en poids ZrO₂ / Al₂O₃ est > 2.

5. Verre selon l'une quelconque des revendications 1 à 4, **caractérisé en ce que** la somme de ZrO₂, de La₂O₃ et de TiO₂ est > 10.

6. Verre selon l'une quelconque des revendications 1 à 5, ayant une résistance hydrolytique H de la classe hydrolytique 1, une résistance aux acides S de la classe d'acides 3 ou mieux, une résistance aux bases L de la classe de bases 1, une température de transformation T_{g} d'au moins 650°C, un coefficient de dilatation thermique α_{20/300} compris entre 4, 1 x 10⁻⁶/K et 7,4 x 10⁻⁶/K, un indice de réfraction n_{d} compris entre 1,53 et 1,63, un indice Abbe υ_{d} compris entre 48 et 58 et une déviation négative de la dispersion partielle des droites normales dans le domaine spectral bleu ΔP_{g,F} allant jusqu'à -0,0130.

7. Fibre en verre se composant d'un verre selon l'une quelconque des revendications 1 bis 6.

8. Utilisation d'une fibre en verre selon la revendication 7 en vue du renforcement du béton.

9. Utilisation d'un verre selon l'une quelconque des revendications 1 à 6 en tant que verre substrat dans la technique des affichages.

10. Utilisation d'un verre selon l'une quelconque des revendications 1 à 6 pour les scellements d'étanchéité au tungstène ou au molybdène.

11. Utilisation d'un verre selon l'une quelconque des revendications 1 à 6 en tant que verre pour applications optiques.

12. Utilisation d'un verre selon l'une quelconque des revendications 1 à 6 en tant que verre de récipient pour des liquides corrosifs du point de vue chimique.

13. Utilisation d'un verre selon l'une quelconque des revendications 1 à 6 ayant un coefficient de dilatation thermique α_{20/300} compris entre 4,5 et 6,0 * 10⁻⁶/K en tant que verre substrat dans la technique photovoltaïque;
